# FASCICULE DE BREVET EUROPEEN

(11) **EP 2 400 505 B1**
(45) Date de publication et mention de la délivrance du brevet: **04.10.2017**
(21) Numéro de dépôt: 11171362.4
(22) Date de dépôt: 24.06.2011
(51) Int. Cl.: G21F 9/36, C08K 3/38, G21F 1/10, G21F 5/06

(54) **Matériau de blindage neutronique, dispositif de stockage et de transport radioactifs et procédé de fabrication**
Neutronen-Abschirmmaterial, Vorrichtung zum Lagern und Transportieren von radioaktiven Stoffen und entsprechendes Herstellungsverfahren
Neutronic shielding material, radioactive materials storage and transport device, manufacturing method

(30) Priorité: 28.06.2010 FR 1002687; 05.11.2010 FR 1004350
(43) Date de publication de la demande: 28.12.2011
(73) Titulaire: Constructions Industrielles de la Méditerranée - CNIM, 75008 Paris (FR); TN International, 78180 Montigny Le Bretonneux (FR)
(72) Inventeur: Marty, Eric, Louis, Georges, 83200 Toulon (FR)
(74) Mandataire: Thinat, Michel

(56) Documents cités:
- EP-A1- 1 713 088
- EP-A2- 0 242 227
- DE-A1- 3 238 831
- JP-A- 2000 009 890
- US-A- 4 176 093

## Description

L'invention concerne principalement un matériau de blindage neutronique.

L'invention concerne en outre un dispositif destiné au stockage et au transport de produits nucléaires ou radioactifs comprenant un tel matériau de blindage neutronique.

L'invention concerne enfin un procédé de fabrication d'un tel dispositif.

Les matériaux de blindage neutroniques sont utilisés pour protéger les utilisateurs des rayonnements neutroniques émis par des produits radioactifs.

Ces matériaux de blindage neutroniques sont plus particulièrement utilisés dans des conteneurs destinés au stockage de produits radioactifs et au transport de ces produits radioactifs vers des centrales nucléaires ou des centres de traitement et de recyclage de produits radioactifs.

Ce transport réalisé par route, train ou bateau doit s'effectuer de manière hautement sécurisée.

Le conteneur doit ainsi être en mesure de contenir un maximum des radiations émises par son contenu, de résister à des événements accidentels comme le feu, la perforation, une chute avec ou sans poinçonnement, une pression externe en cas d'immersion dans l'eau et permettre une évacuation de la chaleur résiduelle du combustible transporté et ce, dans le respect de la réglementation en vigueur en matière de produits radioactifs.

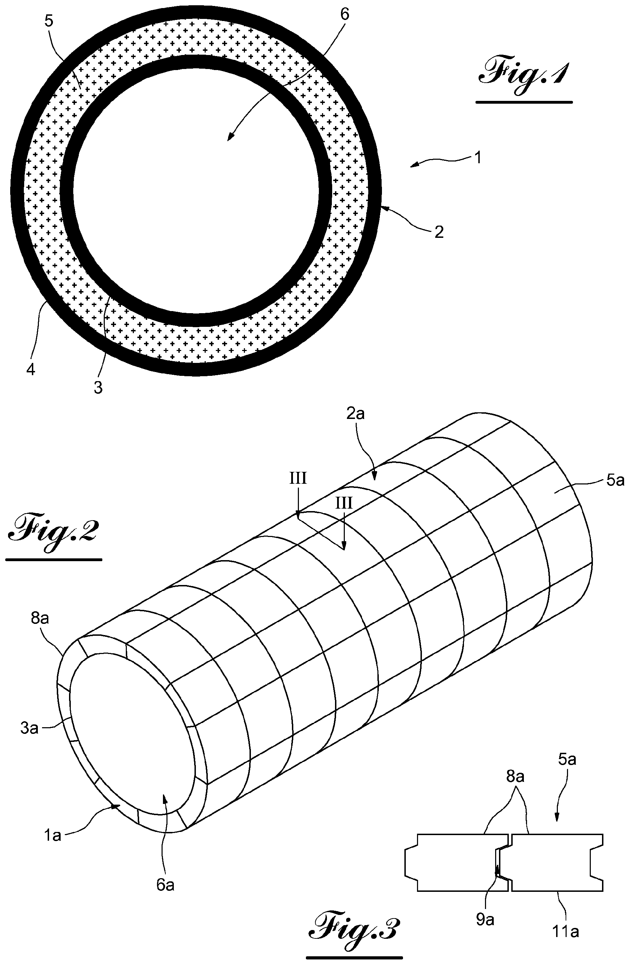

Un conteneur de ce type est décrit en référence à la figure 1.

Le conteneur est généralement constitué d'un corps tubulaire cylindrique 1, dont les deux extrémités sont destinées à être fermées respectivement par deux couvercles étanches non représentés, et dont la cavité interne 6 reçoit un panier d'assemblage de produits radioactifs.

Le corps tubulaire 1 a une double fonction de tenue aux agressions extérieures et d'étanchéité vis-à-vis des émissions radioactives. Ce corps tubulaire comprend une paroi latérale multicouches 2 définie par une paroi latérale interne 3 et une paroi latérale externe 4, ainsi qu'une paroi intermédiaire 5.

Il est généralement acquis que le corps tubulaire d'un emballage de combustible nucléaire est constitué d'une paroi interne 3 et d'une paroi externe 4 en acier, ainsi que d'une paroi intermédiaire 5 en matériau de blindage neutronique ou encore appelée paroi neutrophage.

On connait par la publication EP 1 446 808 un matériau de blindage neutronique qui est composé de résine polyester insaturé à laquelle est ajoutée au moins un composé inorganique hydrogéné appartenant au groupe des hydrates d'alumine et de l'hydroxyde de magnésium, et au moins un composé inorganique de bore.

Selon cette publication, un matériau de blindage neutronique comprenant ces deux composés et pour lequel la concentration en hydrogène est comprise entre 3.10²² et 5,5.10²² atomes par cm³ et la concentration en bore est comprise entre 4.10²¹ et 25.10²¹ atomes par cm³ assure correctement sa fonction de blindage neutronique.

Néanmoins, ce matériau présente l'inconvénient de présenter une masse volumique importante et de nécessiter un procédé de mise en oeuvre par coulée à chaud entre la paroi latérale interne 3 et la paroi latérale externe 4, ce qui constitue une fabrication contraignante et coûteuse.

Or l'utilisation de ce matériau de blindage neutronique pour réaliser la couche intermédiaire du conteneur de la figure 1 conduit à un poids résultant du conteneur très important qui le situe en limite voire en dehors du gabarit routier règlementaire.

L'invention vise principalement un matériau de blindage neutronique allégé en poids, de façon à pouvoir augmenter le volume et la charge utiles d'un conteneur de stockage et de transport de produits radioactifs comprenant un tel matériau et ce, dans le respect du gabarit routier et des géométries d'accueil de l'emballage.

A cet effet, le matériau de blindage neutronique de l'invention est essentiellement caractérisé en ce qu'il est réalisé à partir d'un polymère à chaîne hydrocarbonée contenant intrinsèquement une concentration en hydrogène supérieure à 3.10²² atomes/cm³, et en ce qu'il comprend au moins un élément neutrophage en quantité suffisante pour garantir la fonction d'absorption des émissions neutroniques de produits radioactifs, le polymère à chaîne hydrocarbonée étant un élastomère thermodurcissable choisi parmi l'éthylène-propylène-monomère (EPM) ou l'éthylène-propylène-diène-monomère (EPDM).

Le matériau de blindage neutronique de l'invention peut également comporter les caractéristiques optionnelles suivantes considérées isolément ou selon toutes les combinaisons techniques possibles :
- le polymère à chaîne hydrocarbonée est de l'éthylène-propylène-diène (EPDM), le diène étant choisi parmi le 2-éthylène-5-norbornène, le dicyclopentadiène ou le 5-vinyl-norbornène.
- l'agent de réticulation de l'éthylène-propylène-diène (EPDM) est de type péroxyde organique.
- le péroxyde est du péroxyde de dicumyle (DCP).
- l'élément neutrophage est un composé minéral du bore choisi parmi le borate de zinc de composition chimique générale xZnO.yB₂O₃.nH₂O, le carbure de bore B₄C et le nitrure de bore BN.
- le composé minéral de bore est du carbure de bore B₄C de grade nucléaire, dont la teneur massique minimale en bore est de 77%.
- le matériau de blindage neutronique comprend une concentration en bore supérieure à 4.10²¹ atomes/cm³.

L'invention porte en outre sur un dispositif destiné au stockage et au transport de produits radioactifs, comprenant un corps tubulaire cylindrique constitué d'une paroi latérale multicouches définie par au moins une paroi interne et une paroi externe et qui est caractérisé en ce qu'au moins l'une des parois constitutive de la paroi latérale multicouches est réalisée à partir d'un matériau de blindage neutronique précédemment défini.

De préférence, la paroi latérale multicouches est définie par au moins une paroi interne, une paroi externe et une paroi intermédiaire, la paroi interne définissant une paroi de stockage des produits radioactifs et la paroi externe assurant une fonction de tenue aux agressions extérieures. Dans ce cas, la paroi intermédiaire est réalisée à partir d'un matériau de blindage neutronique précédemment cité.

L'invention porte également sur un procédé de fabrication du dispositif précédent, le dit procédé étant caractérisé en ce qu'il comprend au moins les étapes de :
- fabrication du matériau de blindage neutronique précédemment décrit, et de
- fixation du dit matériau de blindage neutronique sur la paroi interne du dispositif en formant ainsi la paroi intermédiaire.

Le procédé de l'invention peut également comporter les caractéristiques optionnelles suivantes considérées isolément ou selon toutes les combinaisons techniques possibles :
- le procédé comprend en outre les étapes de :
   - fabrication d'au moins deux pièces d'assemblage réalisées à partir du matériau de blindage neutronique précédemment décrit, et
   - assemblage et fixation des dites pièces d'assemblage sur la paroi interne pour former la paroi intermédiaire.
- les pièces d'assemblage sont réalisées à partir d'un matériau de blindage neutronique fait à partir d' éthylène-propylène-diène (EPDM), et les dites pièces d'assemblage en éthylène-propylène-diène (EPDM) sont réalisées par moulage compression ou par injection.
- les pièces d'assemblage sont de forme parallélépipédique et sont directement réalisées à l'épaisseur finale requise.
- les pièces d'assemblage présentent une géométrie d'emboîtement permettant d'assurer un recouvrement sans jointure lorsqu'une pièce d'assemblage est assemblée à une pièce d'assemblage adjacente.
- les pièces d'assemblage sont usinées par jet d'eau ou par machine-outil.
- les pièces d'assemblage subissent une opération préalable de dégraissage et une opération d'abrasion mécanique consistant en un déglaçage de la peau de moulage.
- les pièces d'assemblage sont fixées par adhérisation sur la paroi interne.
- l'adhérisation des pièces d'assemblage sur la paroi interne est réalisée au moyen d'un adhésif haute performance de type colle structurale de nature époxyde ou de type masse adhésive double face de nature acrylique et/ou silicone, montrant une résistance en température continue de l'ordre de 150°C et polymérisant à température ambiante, ceci de façon à assurer le maintien des pièces d'assemblage sur la paroi interne.

L'invention sera mieux comprise à la lumière de la description qui va suivre, et des figures ci-dessous données uniquement à titre d'exemple :
- la figure 1 est une vue en coupe transversale d'un dispositif de stockage et de transport de matériaux radioactifs de l'art antérieur précédemment décrit,
- la figure 2 est un vue en perspective d'un conteneur de stockage et de transport de matériaux radioactifs de l'invention représenté sans la paroi externe, et
- la figure 3 est une vue en coupe de la paroi intermédiaire selon la ligne III-III de la figure 2.

Selon l'invention, le matériau de blindage neutronique de l'invention comprend une concentration en hydrogène et en bore permettant à ces deux éléments d'assurer les fonctions respectives de modération et de capture des neutrons issus des produits radioactifs.

En effet, l'hydrogène est considéré comme un élément modérateur car il réduit l'énergie cinétique des neutrons par diffusion élastique sur son noyau. On recherche ainsi la teneur en hydrogène la plus élevée possible en raison de son haut pouvoir de ralentissement.

Selon l'invention, le matériau de blindage neutronique est réalisé à partir d'un polymère à chaîne hydrocarboné pour lequel la concentration en hydrogène intrinsèque est suffisante pour assurer la fonction d'élément modérateur.

Selon l'invention, le polymère à chaîne hydrocarboné peut être l'élastomère thermodurcissable éthylène-propylène-diène-monomère (EPDM) qui est naturellement et suffisamment hydrogéné.

Il n'est ainsi pas nécessaire d'ajouter de composés hydrogénés au polymère formant le constituant de base du matériau de blindage neutronique, ce qui permet de se prévaloir d'un allègement de ce matériau.

Autrement dit, l'élastomère thermodurcissable éthylène-propylène-diène-monomère de type EPDM forme à la fois le polymère de base du matériau de blindage neutronique et le composé hydrogéné requis pour cette application.

On utilisera préférentiellement selon l'invention un terpolymère éthylène-propylène-diène-monomère (EPDM) présentant naturellement les caractéristiques suivantes :
- une masse volumique faible, voisine de 0,86 g/cm³
- une concentration massique en hydrogène de 14,3%, ce qui correspond à une densité atomique d'hydrogène d'environ 7,4.10²² atomes/cm³ pour une masse volumique du matériau final d'environ 1,0 g/cm³; l'obtention de cette masse volumique sera expliquée plus loin.

Par ailleurs, le terpolymère éthylène-propylène-diène possède une capacité naturelle à accepter un fort taux de charge. Or pour assurer la capture des neutrons issus des produits radioactifs, des composés minéraux du bore sont ajoutés au matériau de blindage neutronique. Cette capacité à accepter un fort taux de charge permet ainsi d'ajouter la concentration nécessaire en composés minéraux du bore comme il sera vu plus loin.

De plus, le terpolymère éthylène-propylène-diène présente une bonne aptitude à la mise en oeuvre par moulage compression ou par injection.

Enfin, le terpolymère éthylène-propylène-diène présente une excellente résistance à la température, jusqu'à 160°C, à l'oxydation, à l'ozone et au vieillissement thermique, caractéristiques importantes lors qu'il est utilisé pour réaliser un conteneur de stockage et de transport de produits radioactifs.

En ce qui concerne plus particulièrement la température de résistance, les conteneurs de stockage et de transport de produits radioactifs sont soumis à des températures continues comprises généralement entre 100 à 150°C, le niveau de température étant fonction de l'état (frais ou irradié) et de la nature (neuf, recyclé, composition) du combustible.

Par conséquent, le terpolymère éthylène-propylène-diène est également naturellement approprié pour résister aux températures d'utilisation.

Pour obtenir un élastomère terpolymère éthylène-propylène-diène doté de hautes performances thermiques et mécaniques, on privilégie selon l'invention un mélange avec:
- un taux élevé d'éthylène ou un faible taux de polypropylène
- un taux faible de diène de type 2-éthylène-5-norbornène (ENB), dicyclopentadiène (DCPD) ou 2-vinyl-5-norbornène (VNB)
- une réticulation au péroxyde organique, par exemple le péroxyde de dicumyle (DCP)
- de hauts poids moléculaires avec une distribution étroite des masses molaires

L'utilisation de l'élastomère terpolymère éthylène-propylène-diène précédemment décrit permet d'atteindre une concentration d'hydrogène d'environ 7.10²² atomes d'hydrogène/cm³.

Parallèlement au ralentissement des neutrons assurés par la présence naturelle d'hydrogène dans l'élastomère terpolymère éthylène-propylène-diène précité, la capture des neutrons est recherchée. Or cette capture est accompagnée d'une émission de rayons gamma.

Parmi les éléments naturels neutrophages comme le bore, le cadmium, le hafnium ou le gadolinium, le bore est le plus intéressant car il génère les rayonnements gamma les moins énergisants.

La présence de bore est ainsi à privilégier pour assurer la fonction d'écran de protection et le maintien de la sous-criticité du dispositif selon l'invention.

Selon l'invention, le matériau de blindage neutronique comporte des composés minéraux du bore.

Les composés minéraux du bore sont choisis parmi le carbure de bore B₄C, les borates de zinc de composition chimique xZnO.yB₂O₃.nH₂O ou le nitrure de bore BN.

On choisit plus particulièrement le carbure de bore B₄C de grade nucléaire, dont la teneur massique minimale en bore est garantie à hauteur de 77%. En effet, le bore naturel se présente sous deux formes isotopiques stables, de poids atomiques 10 et 11, en concentrations respectives de 20% et 80%. L'efficacité du blindage tient compte de cette isotopie car seul l'isotope bore-10 ralentit les neutrons. Sa section efficace de capture des neutrons étant élevée (3850 barns par atome), il absorbe efficacement les neutrons qu'il a ralentit.

Selon l'invention, on introduit 10,3 % en poids de carbure de bore naturel dans la matrice élastomère éthylène-propylène-diène (EPDM). On obtient alors un taux massique de bore de 8% dans le matériau final correspondant à une concentration en bore d'environ 5.10²¹ atomes de bore/cm³.

La masse volumique du carbure de bore étant de 2,51 g/cm³, l'élastomère éthylène-propylène-diène (EPDM) boré présente ainsi une masse volumique de 1,03 g/cm³.

L'ajout nécessaire de composés complémentaires comme des cires paraffiniques pour faciliter la mise en oeuvre de l'élastomère, d'agents de vulcanisation et d'accélérateurs pour accroître la résistance thermique, affecte peu la masse volumique finale du matériau. Ainsi grâce à la nature du matériau de blindage neutronique selon l'invention, ce dernier présente une masse volumique inférieure ou égale à 1,1 g/cm³.

Ainsi, on peut estimer un gain substantiel de poids de l'ordre de 4 tonnes et un gain de volume au niveau de la cavité interne 6 de l'ordre de 100 mm au diamètre, pour un conteneur ayant un corps tubulaire cylindrique 1a de longueur 4,5 m, une paroi latérale interne 3a de diamètre 1340 mm, utilisant pour sa paroi latérale intermédiaire 5a le matériau de blindage neutronique de l'invention d'épaisseur 130 mm, comparé au conteneur de l'art antérieur représenté en figure 1 dont la paroi intermédiaire 5 est constituée d'une résine polyester chargée en minéraux hydrogénés et borés, de masse volumique 1,8 g/cm³, d'épaisseur 180 mm nécessitée par la densité atomique en hydrogène plus faible de la résine comparée au matériau de l'invention, car de l'ordre de 5.10²² atomes/cm³.

Le tableau suivant résume cet exemple :

| Propriétés | Unités | Résine polyester chargée | Matériau de l'invention |
|---|---|---|---|
| Masse volumique | g/cm³ | 1,8 | 1,1 |
| Densité en hydrogène | atomes/cm³ | 5.10²² | 7.10²² |
| Densité en bore | atomes/cm³ | 5.10²¹ | 5.10²¹ |
| Epaisseur de la paroi 5 | mm | 180 | 130 |
| Poids de la paroi latérale intermédiaire | tonne | 7 | 3 |

Pour résumer, l'élastomère éthylène-propylène-diène (EPDM), réticulé au péroxyde, chargé de 10,3% de carbure de bore naturel, permet d'atteindre les principales propriétés suivantes requises pour l'application comme matériau de base de la paroi intermédiaire d'un conteneur de stockage et de transport de produits radioactifs:
- une masse volumique comprise entre 1,03 et 1,10 g/cm3
- une concentration en hydrogène d'environ 7.10²² atomes/cm3
- une concentration en bore d'environ 5.10²¹ atomes/cm3
- une résistance à la température continue de service de l'ordre de 150°C voire plus.

L'élastomère éthylène-propylène-diène (EPDM) est formulé dans un mélangeur interne à fort taux de cisaillement de type Banbury.

Dans le cadre de l'invention, tout polymère à chaîne hydrocarbonée contenant intrinsèquement une concentration en hydrogène supérieure à 3.10²² atomes/cm³ pourra être utilisé comme matériau de blindage neutronique. Par exemple, on pourra utiliser l'éthylène-propylène-monomère(EPM), le polyuréthane (PUR), le nitrile hydrogéné (HNBR) ou du silicone.

En référence aux figures 2 et 3, le conteneur de stockage et de transport de produits radioactifs de l'invention 10 est constitué d'un corps tubulaire cylindrique 1a, dont les deux extrémités sont destinées à être fermées respectivement par deux couvercles étanches, et dont la cavité interne 6a reçoit un panier d'assemblages de produits radioactifs.

Le conteneur comprend une paroi latérale multicouches 2a définie par une paroi latérale interne 3a, une paroi intermédiaire 5a et une paroi latérale externe non visible sur ces figures. La paroi interne 3a et la paroi externe sont métalliques, préférentiellement en titane pour une raison d'allègement de masse. La paroi interne 3a assure principalement une fonction d'absorption des radiations gamma des produits radioactifs et de protection ultime vis-à-vis des agressions extérieures. La paroi externe non représentée assure une fonction de résistance aux agressions extérieures de type décontamination à l'eau acidifiée, choc, perforation, poinçonnement et incendie.

La paroi intermédiaire 5a assure la fonction de paroi neutrophage et est constituée de pièces d'assemblages 8a fixées sur la paroi interne 3a et formant ainsi la paroi intermédiaire 5a.

La fabrication de la paroi intermédiaire 5a s'effectue selon les étapes de :
- fabrication des pièces d'assemblage 8a à partir de l'élastomère éthylène-propylène-diène (EPDM) boré formant matériau de blindage neutronique tel que décrit précédemment, et
- assemblage des pièces d'assemblage 8a et fixation de ces pièces d'assemblages 8a sur la paroi interne 3a.

Les pièces d'assemblage 8a sont réalisées par fabrication du matériau de blindage neutronique en élastomère éthylène-propylène-diène (EPDM) boré tel que précédemment décrit, suivi d'une opération de moulage compression ou d'injection sous forme de pavé ou de tuile à l'épaisseur finale requise. La pièce d'assemblage 8a est directement fabriquée avec le cintre requis par la géométrie de la virole support.

De façon à pouvoir être manipulée et être aisément mise en place sur la virole support par deux opérateurs, chaque pièce d'assemblage présente des dimensions de 500 millimètres de longueur, 500 millimètres de largeur, 130 millimètres d'épaisseur, ce qui représente un poids d'environ 35 kg.

En référence à la figure 3, chaque pièce d'assemblage 8a présente en coupe une géométrie d'emboîtement de forme tronconique 9a permettant un recouvrement total sans jointement lors de l'assemblage d'une pièce d'assemblage 8a à une pièce d'assemblage adjacente.

Dans le cas où il sera nécessaire d'adapter les pièces d'assemblage 8a aux singularités géométriques de la paroi interne 3a, lesdites pièces d'assemblage 8a seront usinées aux côtes requises.

Les pièces d'assemblage 8a sont ensuite adhérisées sur la paroi interne 3a du conteneur de stockage et de transport de produits radioactifs 10 au moyen d'un adhésif haute performance de type colle structurale de nature époxyde ou de type masse adhésive double face de nature acrylique et/ou silicone, montrant une résistance en température continue de 150°C et polymérisant à température ambiante ou modérée pour assurer le maintien des pièces d'assemblage 8a sur la paroi interne 3a.

L'adhérence sera assurée par une préparation de la surface inférieure 11a de chaque pièce d'assemblage 8a et de la paroi interne 3a. La préparation de la surface inférieure 11a de chaque pièce d'assemblage 8a pourra être de type dégraissage au solvant, suivi d'une abrasion mécanique de type émerisage de façon à créer une rugosité de surface, puis encollage avec l'adhésif approprié, la pièce d'assemblage 8a préparée se fixant ensuite sur la paroi interne 3a également préparée et éventuellement encollée.

Une pression d'encollage pourra être exercée au moyen d'un dispositif de placage par mise sous vide de la face d'appui 11a connu de l'auteur et ne pouvant être divulgué de par la confidentialité industrielle dudit procédé, ou bien de type mécanique.

En restant dans le cadre de l'invention, on pourra prévoir que le conteneur de stockage et de transport de produits radioactifs 10 comprend une paroi interne recouverte d'une paroi externe, et que la paroi externe comprend une couche continue d'un polymère à chaîne hydrocarboné pour lequel la concentration en hydrogène intrinsèque est suffisante pour assurer la fonction d'élément modérateur, par exemple l'élastomère éthylène-propylène-diène (EPDM), ce polymère incluant des fibres qui assurent la résistance mécanique de cette paroi externe. Une telle paroi externe comprend en outre du bore ou l'un de ses dérivés qui assure la fonction d'absorption des émissions neutroniques des produits radioactifs. Le bore ou l'un de ses dérivés peut être inclut soit dans le polymère, soit dans les fibres.

Dans ce cas, la paroi externe assure à la fois le rôle de paroi neutrophage et de résistance aux agressions extérieures.

## Revendications

1. Matériau de blindage neutronique, **caractérisé en ce qu'**il est réalisé à partir d'un polymère à chaîne hydrocarbonée contenant intrinsèquement une concentration en hydrogène supérieure à 3.10²² atomes/cm³, **en ce qu'**il comprend au moins un élément neutrophage en quantité suffisante pour garantir la fonction d'absorption des émissions neutroniques de produits radioactifs, le polymère à chaîne hydrocarbonée étant un élastomère thermodurcissable choisi parmi l'éthylène-propylène-monomère (EPM) ou l'éthylène-propylène-diène-monomère (EPDM).

2. Matériau selon la revendication 1, **caractérisé en ce que** le polymère à chaîne hydrocarbonée est l'éthylène-propylène-diène-monomère (EPDM), le diène étant choisi parmi le 2-éthylène-5-norbornène, le dicyclopentadiène ou le 5-vinyl-norbornène.

3. Matériau selon la revendication 2, **caractérisé en ce que** l'agent de réticulation de l'éthylène-propylène-diène (EPDM) est de type péroxyde organique.

4. Matériau selon la revendication 3, **caractérisé en ce que** le péroxyde organique est du péroxyde de dicumyle (DCP).

5. Matériau selon l'une quelconque des revendications 1 à 4, **caractérisé en ce que** l'élément neutrophage est un composé minéral du bore choisi parmi le borate de zinc de composition chimique générale xZnO.yB₂O₃.nH₂O, le carbure de bore B₄C et le nitrure de bore BN.

6. Matériau selon la revendication 5, **caractérisé en ce que** le composé minéral de bore est du carbure de bore B₄C de grade nucléaire, dont la teneur massique minimale en bore est de 77%.

7. Matériau selon l'une quelconque des revendications 5 et 6, **caractérisé en ce qu'**il comprend une concentration en bore supérieure à 4.10²¹ atomes/cm³.

8. Dispositif destiné au stockage et au transport de produits radioactifs, comprenant un corps tubulaire cylindrique (1a) constitué d'une paroi latérale multicouches (2a) définie par au moins une paroi interne et une paroi externe, **caractérisé en ce qu'**au moins l'une des parois (5a) constitutive de la paroi latérale multicouches (2a) est réalisée à partir d'un matériau de blindage neutronique selon l'une quelconque des revendications 1 à 8.

9. Dispositif selon la revendication 8, **caractérisé en ce qu'**il comprend un corps tubulaire cylindrique (1a) constitué d'une paroi latérale multicouches (2a) définie par une paroi interne (3a), une paroi externe (4a) et une paroi intermédiaire (5a), la paroi interne (3a) définissant une paroi de stockage des produits radioactifs et la paroi externe (4a) assurant une fonction de tenue aux agressions extérieures et **en ce que** la paroi intermédiaire (5a) est réalisée à partir d'un matériau de blindage neutronique selon l'une quelconque des revendications 1 à 8.

10. Procédé de fabrication du dispositif selon la revendication 9, **caractérisé en ce qu'**il comprend au moins les étapes de :
- fabrication du matériau de blindage neutronique des revendications 1 à 8, et de
- fixation du dit matériau sur la paroi interne (3a) du dispositif en formant ainsi la paroi intermédiaire (5a).

11. Procédé selon la revendication 10, **caractérisé en ce qu'**il comprend en outre les étapes de :
- fabrication d'au moins deux pièces d'assemblage (8a) réalisées à partir du matériau de blindage neutronique des revendications 1 à 8, et
- assemblage et fixation des dites pièces d'assemblage (8a) sur la paroi interne (3a) pour former la paroi intermédiaire (5a).

12. Procédé selon la revendication 11, **caractérisé en ce que** les pièces d'assemblage (8a) sont réalisées à partir d'un matériau de blindage neutronique selon l'une quelconque des revendications 3 à 8, et **en ce que** les dites pièces d'assemblage (8a) en éthylène-propylène-diène (EPDM) sont réalisées par moulage compression ou par injection.

13. Procédé selon l'une quelconque des revendications 11 et 12, **caractérisé en ce que** les pièces d'assemblages (8a) sont de forme parallélépipédique et sont directement réalisées à l'épaisseur finale requise.

14. Procédé selon l'une quelconque des revendications 11 à 13, **caractérisé en ce que** les pièces d'assemblages (8a) présentent une géométrie d'emboîtement (9a) permettant d'assurer un recouvrement sans jointure lorsqu'une pièce d'assemblage (8a) est assemblée à une pièce d'assemblage adjacente (8a).

15. Procédé selon l'une quelconque des revendications 11 à 14, **caractérisé en ce que** les pièces d'assemblages (8a) sont usinées par jet d'eau ou par machine-outil.

16. Procédé selon l'une quelconque des revendications 11 à 15, **caractérisé en ce que** les pièces d'assemblages (8a) subissent une opération préalable de dégraissage et une opération d'abrasion mécanique.

17. Procédé selon l'une quelconque des revendications 11 à 16, **caractérisé en ce que** les pièces d'assemblages (8a) sont fixées par adhérisation sur la paroi interne (3).

18. Procédé selon la revendication 17, **caractérisé en ce que** l'adhérisation des pièces d'assemblage (8a) sur la paroi interne (3a) est réalisée au moyen d'un adhésif haute performance de type colle structurale de nature époxyde ou de type masse adhésive double face de nature acrylique et/ou silicone, montrant une résistance en température continue de l'ordre de 150°C et polymérisant à température ambiante de façon à assurer le maintien des pièces d'assemblage (8a) sur la paroi interne (3a).

## Patentansprüche

1. Neutronen-Abschirmmaterial, **dadurch gekennzeichnet, dass** es aus einem Polymer mit Kohlenwasserstoffkette hergestellt ist, enthaltend intrinsisch eine Wasserstoffkonzentration über 3.10²² Atome/cm³, und dass es mindestens ein neutrophages Element in ausreichender Menge umfasst, um die Absorptionsfunktion der Neutronenemissionen radioaktiver Produkte zu garantieren, wobei das Polymer mit Kohlenwasserstoffkette ein duroplastisches Elastomer ist, ausgewählt aus dem Ethylen-Propylen-Monomer (EPM) oder dem Ethylen-Propylen-Dien-Monomer (EPDM).

2. Material nach Anspruch 1, **dadurch gekennzeichnet, dass** das Polymer mit Kohlenwasserstoffkette das Ethylen-Propylen-Dien-Monomer (EPDM) ist, wobei das Dien aus dem 2-Ethylen-5-norbornen, dem Dicyclopentadien oder dem 5-Vinylnorbornen ausgewählt ist.

3. Material nach Anspruch 2, **dadurch gekennzeichnet, dass** das Vernetzungsmittel des Ethylen-Propylen-Diens (EPDM) vom Typ organisches Peroxid ist.

4. Material nach Anspruch 3, **dadurch gekennzeichnet, dass** das organische Peroxid Dicumylperoxid (DCP) ist.

5. Material nach einem der Ansprüche 1 bis 4, **dadurch gekennzeichnet, dass** das neutrophage Element eine mineralische Borverbindung ist, die aus dem Zinkborat mit der allgemeinen chemischen Zusammensetzung xZnO.yB₂O₃.nH₂O, dem Borcarbid B₄C und dem Bornitrid BN ausgewählt ist.

6. Material nach Anspruch 5, **dadurch gekennzeichnet, dass** die mineralische Borverbindung Borcarbid B₄C mit Nukleargrad ist, dessen minimaler Massengehalt an Bor 77 % beträgt.

7. Material nach einem der Ansprüche 5 und 6, **dadurch gekennzeichnet, dass** es eine Konzentration an Bor über 4.10²¹ Atome/cm³ umfasst.

8. Vorrichtung, die zum Lagern und für den Transport radioaktiver Produkte bestimmt ist, umfassend einen zylindrischen rohrförmigen Körper (1a), gebildet von einer mehrschichtigen Seitenwand (2a), die von mindestens einer Innenwand und einer Außenwand definiert ist, **dadurch gekennzeichnet, dass** mindestens eine der die mehrwandige Seitenwand (2a) bildenden Wände (5a) aus einem Neutronen-Abschirmmaterial nach einem der Ansprüche 1 bis 8 hergestellt ist.

9. Vorrichtung nach Anspruch 8, **dadurch gekennzeichnet, dass** sie einen zylindrischen rohrförmigen Körper (1a), gebildet von einer mehrschichtigen Seitenwand (2a), die von einer Innenwand (3a), einer Außenwand (4a) und einer Zwischenwand (5a) definiert ist, umfasst, wobei die Innenwand (3a) eine Lagerwand der radioaktiven Produkte definiert und die Außenwand (4a) eine Schutzfunktion vor Angriffen von außen erfüllt und dass die Zwischenwand (5a) aus einem Neutronen-Abschirmmaterial nach einem der Ansprüche 1 bis 8 hergestellt ist.

10. Verfahren zur Herstellung der Vorrichtung nach Anspruch 9, **dadurch gekennzeichnet, dass** es mindestens die folgenden Schritte umfasst:
- Herstellen des Neutronen-Abschirmmaterials der Ansprüche 1 bis 8, und
- Befestigen des Materials auf der Innenwand (3a) der Vorrichtung, um so die Zwischenwand (5a) zu bilden.

11. Verfahren nach Anspruch 10, **dadurch gekennzeichnet, dass** es ferner die folgenden Schritte umfasst:
- Herstellen von mindestens zwei Verbindungsteilen (8a), hergestellt aus dem Neutronen Abschirmmaterial der Ansprüche 1 bis 8, und
- Verbinden und Befestigen der Verbindungsteile (8a) auf der Innenwand (3a), um die Zwischenwand (5a) zu bilden.

12. Verfahren nach Anspruch 11, **dadurch gekennzeichnet, dass** die Verbindungsteile (8a) aus einem Neutronen-Abschirmmaterial nach einem der Ansprüche 3 bis 8 hergestellt sind und dass die Verbindungsteile (8a) aus Ethylen-Propylen-Dien (EPDM) mittels Druckformen oder Einspritzen hergestellt sind.

13. Verfahren nach einem der Ansprüche 11 und 12, **dadurch gekennzeichnet, dass** die Verbindungsteile (8a) eine parallelepipedische Form haben und direkt in der erforderlichen finalen Dicke hergestellt sind.

14. Verfahren nach einem der Ansprüche 11 bis 13, **dadurch gekennzeichnet, dass** die Verbindungsteile (8a) eine Rastgeometrie (9a) aufweisen, die erlaubt, eine Abdeckung ohne Fuge sicherzustellen, wenn ein Verbindungsteil (8a) mit einem benachbarten Verbindungsteil (8a) verbunden ist.

15. Verfahren nach einem der Ansprüche 11 bis 14, **dadurch gekennzeichnet, dass** die Verbindungsteile (8a) mit Wasserstrahl oder mit Werkzeugmaschine bearbeitet sind.

16. Verfahren nach einem der Ansprüche 11 bis 15, **dadurch gekennzeichnet, dass** die Verbindungsteile (8a) einem vorherigen Entfettungsvorgang und einem Vorgang des mechanischen Schleifens unterzogen werden.

17. Verfahren nach einem der Ansprüche 11 bis 16, **dadurch gekennzeichnet, dass** die Verbindungsteile (8a) mittels Haftverbindung auf der Innenwand (3) befestigt sind.

18. Verfahren nach Anspruch 17, **dadurch gekennzeichnet, dass** die Haftverbindung der Verbindungsteile (8a) auf der Innenwand (3a) mit Hilfe eines Hochleistungs-Haftmittels vom Typ Strukturkleber der Art Expoxyd oder vom Typ doppelseitige Haftmasse der Art Acryl und/oder Silikon durchgeführt wird, mit einer kontinuierlichen Temperaturbeständigkeit von zirka 150°C und polymerisierend bei Raumtemperatur, derart, dass der Halt der Verbindungsteile (8a) auf der Innenwand (3a) gesichert ist.

## Claims

1. A neutronic shielding material, **characterized in that** it is made from a polymer with a hydrocarbon chain intrinsically containing a hydrogen concentration of 3.10²² atoms/cm³, **in that** it comprises at least one neutron-absorbing element in a sufficient quantity to guarantee the function of absorbing neutron emissions from radioactive products, the polymer with a hydrocarbon chain being a thermosetting elastomer chosen from among ethylene-propylene-monomer (EPM) or ethylene-propylene-diene-monomer (EPDM).

2. The material according to claim 1, **characterized in that** the polymer with a hydrocarbon chain is ethylene-propylene-diene-monomer (EPDM), the diene being chosen from among 2-ethylene-5-norbornene, dicyclopentadiene or 5-vinyl-norbornene.

3. The material according to claim 2, **characterized in that** the cross-linking agent of the ethylene-propylene-diene (EPDM) is of the organic peroxide type.

4. The material according to claim 3, **characterized in that** the organic peroxide is dicumyl peroxide (DCP).

5. The material according to any one of claims 1 to 4, **characterized in that** the neutron-absorbing element is a mineral compound of boron chosen from among zinc borate with general chemical composition xZnO.yB₂O₃.nH₂O, boron carbide B₄C and boron nitride BN.

6. The material according to claim 5, **characterized in that** the boron mineral compound is nuclear-grade boron carbide B₄C, the minimum boron weight content of which is 77%.

7. The material according to any one of claims 5 and 6, **characterized in that** it comprises a boron concentration greater than 4.10²¹ atoms/cm³.

8. A device intended to store and transport radioactive products, comprising a cylindrical tubular body (1a) made up of a multilayer side wall (2a) defined by at least an inner wall and an outer wall, **characterized in that** at least one of the component walls (5a) of the multilayer side wall (2a) is made from a neutronic shielding material according to any one of claims 1 to 8.

9. The device according to claim 8, **characterized in that** it comprises a cylindrical tubular body (1a) made up of a multilayer side wall (2a) defined by an inner wall (3a), an outer wall (4a) and an intermediate wall (5a), the inner wall (3a) defining a storage wall for radioactive products and the outer wall (4a) serving to withstand outside attacks, and **in that** the intermediate wall (5a) is made from a neutronic shielding material according to any one of claims 1 to 8.

10. A method for manufacturing the device according to claim 9, **characterized in that** it comprises at least the following steps:
- manufacturing the neutronic shielding material according to claims 1 to 8, and
- fastening said material on the inner wall (3a) of the device, thus forming the intermediate wall (5a).

11. The method according to claim 10, **characterized in that** it further comprises the following steps:
- manufacturing at least two assembly parts (8a) made from the neutronic shielding material of claims 1 to 8, and
- assembling and fastening said assembly parts (8a) on the inner wall (3a) to form the intermediate wall (5a).

12. The method according to claim 11, **characterized in that** the assembly parts (8a) are made from a neutronic shielding material according to any one of claims 3 to 8, and **in that** said assembly parts (8a) made from ethylene-propylene-diene (EPDM) are made by compression or injection molding.

13. The method according to any one of claims 11 and 12, **characterized in that** the assembly parts (8a) are parallelepiped and are made directly with the required final thickness.

14. The method according to any one of claims 11 to 13, **characterized in that** the assembly parts (8a) have a nesting geometry (9a) making it possible to provide overlapping without joints when an assembly part (8a) is assembled to an adjacent assembly part (8a).

15. The method according to any one of claims 11 to 14, **characterized in that** the assembly parts (8a) are machined by waterjet or machine-tool.

16. The method according to any one of claims 11 to 15, **characterized in that** the assembly parts (8a) undergo a prior degreasing operation and a mechanical abrasion operation.

17. The method according to any one of claims 11 to 16, **characterized in that** the assembly parts (8a) are fastened by adhesion on the inner wall (3).

18. The method according to claim 17, **characterized in that** the adhesion of the assembly parts (8a) on the inner wall (3a) is done using a high-performance adhesive of the epoxide structural glue type or of the acrylic and/or silicone double-sided adhesive mass type, demonstrating a continuous temperature resistance of about 150°C and polymerizing at ambient temperature so as to maintain the assembly parts (8a) on the inner wall (3a).
